# EUROPEAN PATENT APPLICATION

(11) **EP 1 195 469 A1**
(43) Date of publication of application: **10.04.2002**
(21) Application number: 00925296.6
(22) Date of filing: 28.04.2000
(51) Int. Cl.: E01H 1/12

(54) **DEVICE FOR CURBING DOGS AND COLLECTING THEIR DROPPINGS**

(30) Priority: 30.04.1999 ES 9901115 U
(71) Applicant: Can-Kit, S.L., 46002 Valencia (ES)
(72) Inventor: MAESO FERNANDEZ, Pascual, 46900 Torrent (ES)
(74) Representative: Molina Garcia, Julia
(86) International application number: ES0000158
(87) International publication number: WO0066838

(57) **Abstract**

The purpose of the mentioned invention is a device for the handling of dogs as well as the collection of their excrements. The device is made of a plastic body with a handle having in its rear side a button to control the leash that holds the dog by its collar. Thus this device has a small box in its lower side which functions by means of a button placed in the handle. With the help of lateral guides it goes down led by springs that allow the opening and the collection of the excrements placed in a plastic bag for such purpose inside the small box.

## Description

The present invention related to a device to handle dogs and pick their excrement up.

Devices of this type are know by US-A-5174520 and DE-A-3225602.

In the following report and accompaning pictures, we describe a new device to handle dogs as well as to pick their excrements up. This mechanism lets the owner handle dogs with a leash that can be adjustable or non adjustable. The excrements can be picked up with the device which can be cleaned for further use. The mechanism we are referring to has structural and unique characteristics which defer from other devices on the market. This plus its innovative and practical features are good enough basis to obtain the rights for, as far as its manufacturing and sell by the titular following The Patent regulations for its use. This device has a plastic body with a special features strap to be handled of by the owner or carer in the rear side. Such strap possesses special features such as a handle which allows the owner to control or adjust the leash. A spring, which appears either at the front or back of the handle can be use to roll up the leash on it.

In the lower side of the device and along the body there is a moving mechanism going down from the lower side of the strap. It works with the touch of the fingers over notches designed for such purpose. Pressing such mechanism allows the lowering and opening of a small box with parts in the shape of a narrow entrance which allows the collection of the excrements of the dog. The person using the device will stop pressing the button so that mechanism will go up to its initial position. At the same time the small box with the excrements will be closed by the action of the springs for such purpose. The excrements will be kept for its appropriate disposal.

An optional mechanism for the collection will be one without screws and springs. The device being described has guides inclined inside the transverse sides that when the vertical mechanism is pressed produces the opening of the device allowing the collection of excrements taking to both moving sides of the mechanism and placing some metal plates longwise to act as guides to the closing of both sides of the small box once the excrements have been collected. The closing is made by the simple pressure or pulling against the floor.

For a better understanding of the general characteristics described, there are enclosed pictures which show a demonstration of the use of the device.

It's a fact the informative condition of the pictures. The pictures must be thoroughly examined. The figures in the enclosed pictures show the following:
Figure 1: A handle next to the button that makes possible the control on the leash that is joined to the collar with the small box. It can be seen in the lower side of the device a squared box with rounded sides where the mechanism for the collection of the faeces is. It functions pressing the handle and followed by the opening of the collection metal plates. By releasing the fingers it closes taking the excrements.
Figure 2: Lower side of the device according to figure 1 with the collecting mechanism in its closed position. The guides to open and close the mechanism are shown as well as the tensing springs that will keep the small box closed to pick the excrements up.
Figure 3: Lower side of the device in the same position as figure 2. In this figure the mechanism of the small box to pick up the excrements is opened by pressing the mechanism downwards which opening is originated by guides on the sides of the small box.
Figure 4: Transverse section to A-B in the upright position of figure 1. The tensing springs that keep the mechanism of the box closed, as well as the guides that make possible the opening and closing by the pressure from the fingers of user.
Figure 5: Same transverse view as in figure 4 but showing the functioning of the collection of the excrements. The box is opened by a hinges placed in the mechanism itself. The box is controlled by opening and closing rollers.
Figure 6: Lower side of the device as an optional way closing the mechanism for the collection of faeces. The inclined guides are shown as well as the metal plates that allow to close the box once the excrements are inside by pressing the mechanism against the floor or by any other method. This figure shows the mechanism closed.

In this case the springs and the guide screws are eliminated and instead it can be seen some inclined guides in the internal side of the small box upon which protruding grooves are placed on the lateral side of the opening shovels which should be pressed on the upper side by the person handling the dog. Together with some plates on the lateral sides which allow the closing of the small box once the excrements have been collected.

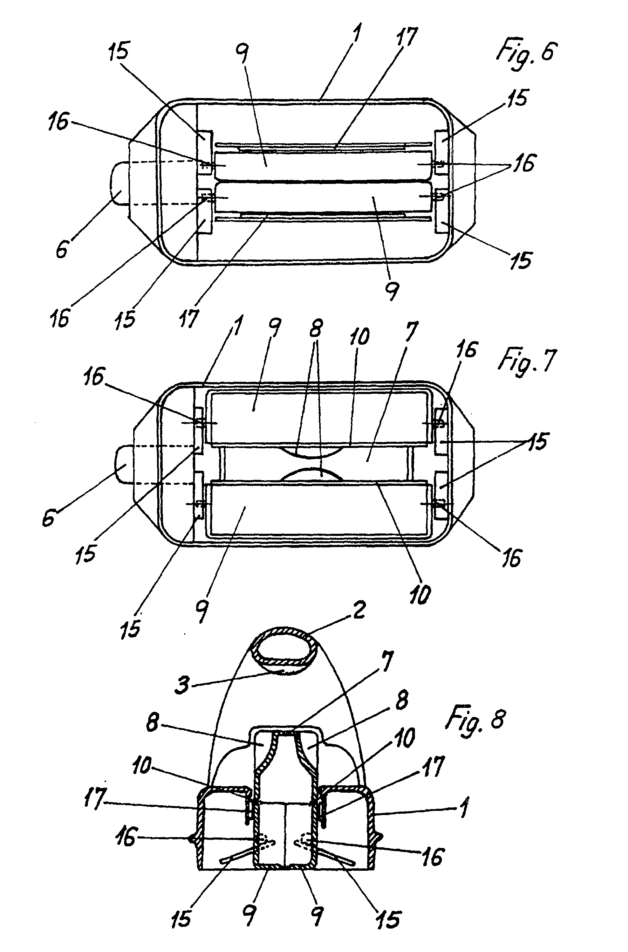

Figure 7: Same view as in figure 6. Here mechanism is opened by the upper pressure, the movement of the grooves on the opening box to the guides on both lateral sides of the small box.

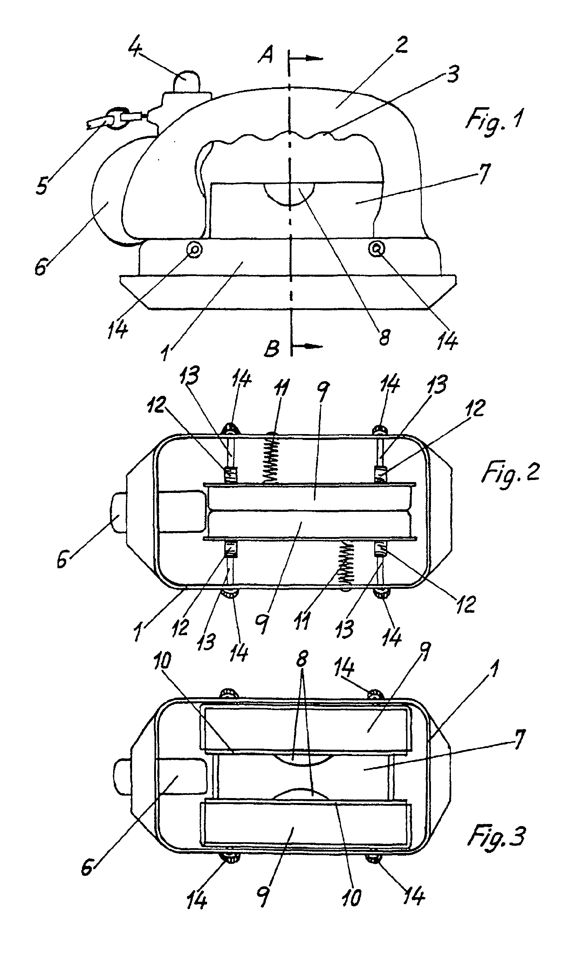

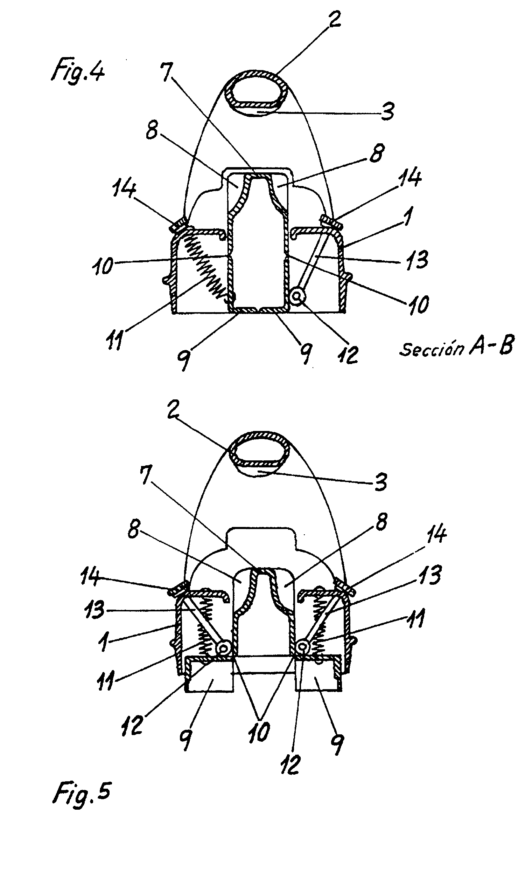

Figure 8: Transverse section of figure 6, similar to figure 4, with the inclined guides of the internal grooves of the small box and the longwise plates which allow the closing of the small box.

Referring to the enclosed pictures it's important to point out that in the figures there are numbers related to the descriptions and characteristics and functioning according to the following explanations: 1.- body, upper side. 2.- the handle with anatomical cavities. 3.- to place the fingers over the handle 2. 4.-the button. 5.- control on the leash that is joined to the collar for its use and control which part can be rolled up inside the small box. 6.- which can be placed in the front or rear of the device.

Between the body -1- and the handling strap there is a cavity where part -7- is found to move it downwards with the help of the fingers, pushing over cavities -8- in both sides, this part -7- is inside the body of the device -1-, being part of the small box, made up of articulated parts in the shape of shovels -9- for the collection of the excrements articulating these shovels -9- by using part -7- by the joint point -10- in the shape of hinges.

To carry out the collection of the faeces, the device should be held by the strap -2-and part -7- should be pressed with the fingers by the grooves -8- making it go down and with it the shovels -9- which in its decent will start opening by the traction of the springs -11-. Thus opening the shovels -9- by its articulation point -10- being guided by the rollers -12-which are part of the sticks -13- mounted over the body -1- by means of nuts -14- . Thus placing the device with the collecting shovels opened over the excrements to be picked up and in this moment, releasing part -7- over the grooves -8- and by means of the springs -11-the shovels -9- will close picking up the excrement, being ready for its appropriate disposal away from the public highway and thus making the cleaning of the device easy.

As an alternative to the described device there are instead of springs -11-, rollers -12-, sticks -13-, and nuts -14-, guides -15- inclined which will be placed inside on both sides of the body -1-, the ledges will be placed on the guides -16-, which will come through the transverse sides -9- being pressed in an ascending way by the moving of the ledges -16- on the guides - 15- will lead to the opening to pick the excrement up, the shovels -9- will carry metal plates - 17-, that let the shovels move along -9-, working as a guide to their closing once the excrements are picked up by pressing the device against the floor or using any other way.

Being described the device we would like to point the possibility of the manufacturing in a range of materials, shapes, sizes and colours, as well as to bring in any variations that the use may require without any change according to this Patent.

## Claims

1. Device to carry dogs and pick up their excrements, which comprises a rectangular body (1) which has an upper handle (2) provided with cavities (3) to place the fingers, said handle having been provided with a button (4) in the upper front side, which button (4) constitutes a brake to the leash (5) that rolls up inside a small box (6) provided with an internal tensing spring, placed indistinctly in the rear or front side of the device and either in the upper or lower side, **characterized in that** in the upper part of the body (1) and in the cavity between said body and the handle (2), a small box (7), vertically and downwardly displaceable, has been attached to the body, with the small box (7) having its lower side extended by means of shovels (9) articulated to said small box (7) by means of hinges (10) formed in the same material, with the attached small box (7) having on both sides cavities to be pushed with fingers in a descending way, the descent of which causing the opening of the lower shovels (9) and the body (7), so that the last is now able to automatically pick up the excrements when the pressure on the small box (7) is released and tensing springs return lead said shovels (9) to their closed condition, with the excrements being carried inside the box (7), and wherein said shovels (9) also have sliding guides for the opening and closing thereof.

2. Device to handle dogs and pick up their excrements according to the preceding claim 1, mainly **characterized in that** said fixed small box (7) comprises internal guides on both lateral sides formed by metal plates (15) inclined with respect to the central plane and obliquely descending to the respective side, with protruding stubs (16) fixed to the opening shovels (9) which are able to slide by resting on said guides (15), such that when the small box (7) is pushed from its upper side using cavities (8) or a handle, the stubs (16) resting on the oblique guides (15) will cause the mentioned opening for the collection of faeces, the shovels (9) carrying on their lateral sides guides (17) in the form of longitudinal plates provided for the aligned displacement of said shovels (9) during their opening and closing movements, and where the closing movement will take place either by the simple pressure exerted by the mechanism on the floor or by any other method.
